# EUROPEAN PATENT APPLICATION

(11) **EP 4 579 318 A1**
(43) Date of publication of application: **02.07.2025**
(21) Application number: 23307388.1
(22) Date of filing: 26.12.2023
(51) Int. Cl.: G02B 27/62

(54) **OPTICAL CALIBRATION SYSTEM AND ALIGNMENT METHOD**

(71) Applicant: Pasqal, 91300 Massy (FR)
(72) Inventor: DUTARTRE, Sylvain, 91300 MASSY (FR)
(74) Representative: Lavoix

(57) **Abstract**

The invention relates to a method for aligning an optical element mounted on a structure (20) of a quantum processor, the alignment being carried out as a function of a so-called coincidence position (P_{I}) relative to the structure (20), the coincidence position (P_{I}) being the intersection of a first reference axis (A1) and of a second reference axis (A2),
the method being carried out using an alignment set, comprising:
- a primary tool (90),
- a secondary tool (92), and
- an adjustable spherical element (94),

the method comprising:
- positioning the adjustable spherical element (94) at the coincidence position (P_{I}) using the primary tool (90) and the secondary tool (92),
- mounting at least a so-called observation device on the structure (20) and adjusting the position of the or each observation device as a function of the adjustable spherical element (94).

## Description

### TECHNICAL FIELD OF THE INVENTION

The present invention concerns an optical calibration system. The present invention also concerns an associated calibration kit. The present invention also relates to an associated alignment method of the optical calibration device. The present invention also concerns an alignment method of at least an optical element of a quantum processor.

### BACKGROUND OF THE INVENTION

Neutral atom-based quantum processors (QPU) comprise numerous optical elements that need to be precisely aligned. Such optical elements comprise multiple laser sources that have multiple roles: cooling and confining neutral atoms, creating arrays of traps to trap atoms (to form registers), exciting atoms (following specific atomic transitions).

A QPU generally has a modular design, which means that different laser sources belonging to distinct modules (trapping, MOT, Rydberg, Raman, etc.) are mounted on a common structure. The structure also contains a vacuum chamber in which the atoms are trapped to form a quantum register. The lasers beams are intended to interact with the atoms generated in the vacuum chamber. Hence, there is a need for a good alignment between the modules in relation to the different beams.

The alignment is currently achieved by aligning each element one after the other, each time according to the last element aligned.

However, this alignment is complicated to achieve. In addition, if an element needs to be replaced, the whole alignment must be started again. Such a way of aligning elements is therefore not adapted to an industrial context.

### SUMMARY OF THE INVENTION

Hence, there exists a need for tools and process enabling to ease the alignment of optical elements of a quantum processor.

To this end, the description relates to an optical calibration system, the optical calibration system having a so-called calibration axis, the optical calibration system comprising:
- a support, the calibration axis having a position and a direction relative to the support,
- an imaging device mounted on the support), the imaging device comprising:
   - a camera comprising an image generation unit and an objective,
   - a collimation unit suitable to emit a collimated beam convoying an image of a so-called collimation object,
      the imaging device having two modes of operation among:
   - an autocollimation mode in which both the image generation unit and the collimation unit are activated so that:
      ∘ a collimated beam emitted by the collimation unit is convoyed so as to be emitted at the output of the optical calibration system along the direction of the calibration axis,
      ∘ the image generation unit generates an image corresponding to the light received by the optical calibration system and collected by the objective, and so that the reflected image of the calibration object, obtained after reflection of the collimated beam on a reflector, is imaged:
         ▪ at a defined measurement position on the generated image when the reflector is perpendicular to the collimated beam, and
         ▪ at a position distant from the defined measurement position when the reflector is not perpendicular to the collimated beam,
   - an imagery mode in which only the image generation unit is activated so that the image generation unit generates an image corresponding to the light received by the optical calibration system and collected by the objective so that an object positioned on the calibration axis be imaged at a defined measurement position on the generated image.

The optical calibration system may comprise one or more of the following features considered alone or in any combination that is technically possible:
- the imaging device comprises a separating unit positioned relative to the camera and the collimation unit so as to define two optical paths:
   - a first optical path between the collimation unit and the objective so as to convoy the collimated beam emitted by the collimation unit at the output of the imaging device, and
   - a second optical path between the image generation unit and the objective so as to convoy light collected by the objective to the image generation unit;
- the separating unit is a beam splitter or a separator cube;
- the optical calibration system comprises an adjustment device suitable to adjust the position and the direction relative to the support of the calibration axis of the optical calibration system;
- the adjustment device comprises a position adjustment unit suitable to modify the position of the image generation unit relative to the support so as to adjust the position of the imaging plane along the axis of the optical calibration system;
- the adjustment device comprises an angular and position adjustment unit, the angular and position adjustment unit being adjustable in orientation relative to the support so as to adjust the direction of the calibration axis of the optical calibration system;
- the angular and position adjustment unit comprises at least an adjustable mirror;
- the angular and position adjustment unit comprises a fixed mirror and two adjustable mirrors;
- the collimation unit comprises a light source, a collimation object and the objective, the light source being suitable to illuminate the collimation object enabling to obtain, at the output of the objective, a collimated beam convoying an image of the collimation object.

The description also relates to an associated calibration kit enabling to align, on a reference axis, the calibration axis of an optical calibration system as previously described, the reference axis being along a so-called reference direction relative to a reference tray and passing by a so-called reference position relative to the reference tray, the reference position being at a so-called reference height, the calibration kit comprising:
- a calibration tray having the same dimensions than the reference tray,
- a first adjustment accessory comprising a so-called calibration mirror, the calibration mirror being at the same height that the reference height when the first adjustment accessory is positioned on the calibration tray,
- a second adjustment accessory comprising a so-called calibration object), the calibration object being at the same height that the reference height when the second adjustment accessory is positioned on the calibration tray, and
- positioning elements positioned on the calibration tray, the positioning elements enabling to:
   - position the first adjustment accessory on the support so that the calibration mirror be perpendicular to the reference direction and on the path of a beam passing by the reference position and along the reference direction, and
   - position the second adjustment accessory on the support so that the calibration object be perpendicular to the reference direction and on the path of a beam passing by the reference position and along the reference direction.

The calibration kit may comprise one or more of the following features considered alone or in any combination that is technically possible:
- the first adjustment accessory and the second adjustment accessory forma single adjustment accessory, the calibration object being superimposed on the calibration mirror.

The description also relates to a method for aligning, on a reference axis, the calibration axis of an optical calibration device as previously described, by using a calibration kit as previously described, the method comprising the steps of:
- fixing the optical calibration system on the calibration tray),
- positioning the first adjustment accessory on the calibration tray according to the positioning elements,
- operating the imaging device of the optical calibration system in the autocollimation mode so that:
   - a collimated beam is sent on the calibration mirror of the first adjustment accessory,
   - an image of the reflected image of the collimation object, obtained by reflection of the image of the collimation object on the calibration mirror, is generated by the image generation unit,
- adjusting, with the adjustment device, the direction of the calibration axis so that the reflected image of the collimation object be superimposed with a defined measurement position on the image generated by the image generation unit,
- positioning the second adjustment accessory on the calibration tray according to the positioning elements,
- operating the imaging device of the optical calibration system in the imagery mode so that an image of the calibration object is generated by the image generation unit, and
- adjusting, with the adjustment device, the position of the calibration axis so that the calibration object be superimposed with the defined measurement position on the image generated by the image generation unit.

The method for aligning the calibration axis of the optical calibration device may comprise one or more of the following features considered alone or in any combination that is technically possible:
- the optical calibration system as previously described, the step of adjusting the position of the calibration axis being carried out by adjusting the position of the image generation unit with the position adjustment unit.
- the optical calibration system is as previously described, the step of adjusting the direction of the calibration axis being carried out by adjusting the orientation of the angular and position adjustment unit.

The description also relates to the use of an optical calibration system as previously described, whose calibration axis is aligned according to a reference axis, so as to align one or several optical modules relative to such a reference axis.

The description also relates to a method for aligning at least an optical element mounted on a structure of a quantum processor, the alignment being carried out as a function of a so-called coincidence position relative to the structure, the coincidence position being the intersection of a first reference axis and of a second reference axis,
the method being carried out using an alignment set, the alignment set comprising at least:
   - a primary tool having a so-called primary axis which is aligned on the first reference axis when the primary tool is mounted at a so-called primary position on the structure, the primary tool being suitable to generate an image as a function of the light received by the primary tool so that an object positioned on the primary axis be imaged at a defined measurement position on the generated image,
   - a secondary tool having a so-called secondary axis which is aligned on the second reference axis when the secondary tool is mounted at a so-called secondary position on the structure, the secondary tool being suitable to generate an image as a function of the light received by the secondary tool so that an object positioned on the secondary axis be imaged at a defined measurement position on the generated image, and
   - an adjustable spherical element,
the method comprising the following phases:
   - positioning the adjustable spherical element at the coincidence position, the positioning phase comprising:
      - mounting the primary tool on the structure at the primary position,
      - mounting the secondary tool on the structure at the secondary position,
      - mounting the adjustable spherical element on the structure and adjusting the position of the adjustable spherical element so that the adjustable spherical element be positioned
         ∘ on the first reference axis using the primary tool, and
         ∘ on the second reference axis using the secondary tool,
   - mounting at least a so-called observation device on the structure and adjusting the position of the or each observation device until the adjustable spherical element be observed at a defined measurement position for the or each observation device.

The alignment method may comprise one or more of the following features considered alone or in any combination that is technically possible:
- the or at least some observation device(s) is/are device(s) enabling to make measurement at the coincidence position, such observation device(s) being for example a camera, a photodiode or a sensor;
- the alignment set also comprises:
   - a tertiary tool having a so-called tertiary axis, the tertiary tool having two modes of operation among:
      - an autocollimation mode in which:
         ∘ a collimated beam is emitted at the output of the tertiary tool along the direction of the tertiary axis, the collimated beam convoying an image of a so-called collimation object, and
         ∘ an image is generated as a function of the light received by the tertiary tool so that the reflected image of the collimation object, obtained after reflection of the collimated beam on a reflector, is imaged at a defined measurement position on the generated image when the reflector is perpendicular to the collimated beam and at a position distant from the defined measurement position when the reflector is not perpendicular to the collimated beam,
      - an imagery mode in which an image is generated as a function of the light received by the tertiary tool so that an object positioned on the tertiary axis be imaged at a defined measurement position on the generated image,
   - a planar mirror, the or at least one observation device, which has been mounted on the structure and adjusted in position on the structure, being the tertiary tool,
      the first reference axis and the second reference axis being axes which are not parallel to any vertical axis relative to the structure,
      the method also comprising the following phases:
   - determining references positions for a third reference axis, the third reference axis being an axis passing by the coincidence position and which is vertical relative to the structure, the determination phase comprising the following steps:
      - positioning the planar mirror in a plane perpendicular to the third reference axis and on the path of the third reference axis,
      - adjusting the orientation of the tertiary tool until the tertiary tool in the autocollimation mode generates an image of the reflected image of the collimation object, obtained by reflection of the image of the collimation object on the planar mirror, at a defined measurement position on the generated image,
      - removing the planar mirror,
      - determining reference positions for the third reference axis using the tertiary tool which has been adjusted;
- the step of determining reference positions for the third reference axis comprises mounting at least two pinholes on the structure so that the pinholes allow the passage of light emitted along the third reference axis, using the tertiary tool, the mounted pinholes forming the reference positions for the third reference axis;
- at least one optical element to be aligned is a vacuum chamber having an objective holder on which are mounted two objectives, one of the objective, called adjustable objective, being adjustable in position relative to the objective holder, the coincidence position being a position where particles are intended to be trapped in the vacuum chamber so as to form a quantum register, the optical axis of the objectives of the objective holder being intended to be positioned at the coincidence position, the vacuum chamber having a center defined as being on the optical axis of the objectives and between the two objectives,

the primary tool having two modes of operation among:
   - an autocollimation mode in which:
      ∘ a collimated beam is emitted at the output of the primary tool along the direction of the primary axis, the collimated beam convoying an image of a so-called collimation object, and
      ∘ an image is generated as a function of the light received by the primary tool so that the reflected image of the calibration object, obtained after reflection of the collimated beam on a reflector, is imaged at a defined measurement position on the generated image when the reflector is perpendicular to the collimated beam and at a position distant from the defined measurement position when the reflector is not perpendicular to the collimated beam,
   - an imagery mode in which an image is generated as a function of the light received by the primary tool so that an object positioned on the primary axis be imaged at a defined measurement position on the generated image,
   the method also comprising a phase of positioning and aligning the vacuum chamber on the structure, which comprises the following steps:
   - mounting the vacuum chamber on the structure,
   - adjusting the position and the orientation of the vacuum chamber and of the adjustable objective until:
      - the optical axis of the adjustable objective be aligned with the first reference axis, using the primary tool,
      - the center of the vacuum chamber is crossed by the third reference axis, using the tertiary tool and preferably the mounted pinholes for the third reference axis;
   - the step of adjusting the position and the orientation of the vacuum chamber and of the adjustable objective comprises :
      - positioning an additional planar mirror on the path of the first reference axis,
      - adjusting the orientation of the additional planar mirror so as to be perpendicular to the first reference axis using the primary tool, and
      - adjusting the position and the orientation of the vacuum chamber and the adjustable objective using the additional planar mirror and the primary tool;
   - the method comprises a phase of mounting on the structure a so-called tertiary laser device so that the tertiary laser device emits a tertiary laser beam which is along the third reference axis, the phase of mounting the tertiary laser device being carried out by:
      - removing the tertiary tool,
      - mounting the tertiary laser device on the structure, and
      - adjusting the position and orientation of the tertiary laser device until the tertiary laser beam emitted by the tertiary laser device passes through the pinholes of the third reference axis;
   - the tertiary laser device is suitable to excite particles in the vacuum chamber, for example to a Rydberg state;
   - the primary tool and the tertiary tool each comprises an optical calibration system, each optical calibration system having a so-called calibration axis, each optical calibration system comprising:
      - a support, the calibration axis having a position and a direction relative to the support,
      - an imaging device mounted on the support, the imaging device comprising:
         - a camera comprising an image generation unit and an objective,
         - a collimation unit suitable to emit a collimated beam convoying an image of a so-called collimation object,
the imaging device having two modes of operation among:
   - an autocollimation mode in which both the image generation unit and the collimation unit are activated so that:
      ∘ a collimated beam emitted by the collimation unit is convoyed so as to be emitted at the output of the optical calibration system along the direction of the calibration axis,
      ∘ the image generation unit generates an image corresponding to the light received by the optical calibration system and collected by the objective, and so that the reflected image of the calibration object, obtained after reflection of the collimated beam on a reflector, is imaged at a defined measurement position on the generated image when the reflector is perpendicular to the collimated beam and is imaged at a position distant from the defined measurement position when the reflector is not perpendicular to the collimated beam,
   - an imagery mode in which only the image generation unit is activated so that the image generation unit generates an image corresponding to the light received by the optical calibration system and collected by the objective so that an object positioned on the calibration axis be imaged at a defined measurement position on the generated image,
the calibration axis of the optical calibration system of the primary tool being the primary axis, the calibration axis of the optical calibration system of the tertiary tool being the tertiary axis;
   - the first reference axis has the position and the direction of a primary laser beam intended to be emitted by a so-called primary laser device of the quantum processor when the primary laser device is mounted on the structure at a defined position, the second reference axis having the position and the direction of a secondary laser beam intended to be emitted by a so-called secondary laser device of the quantum processor when the secondary laser device is mounted on the structure at a defined position;
   - the method comprises a final phase of mounting comprising:
      - removing the primary tool and the secondary tool,
      - mounting the primary laser device on the structure at its defined position, and
      - mounting the secondary laser device on the structure at its defined position.
   - the primary laser device is suitable to generate trapping sites for particles in the vacuum chamber enabling to form a quantum register, the primary laser device comprising for example a spatial light modulator or an acousto-optics deflector;
   - the secondary laser device is suitable to cool down and confine particles in the vacuum chamber, for example by generating a magneto-optical traps;
   - the first reference axis is in a plane horizontal relative to the structure, preferably the second reference axis being also in a plane horizontal relative to the structure;
   - the defined measurement positions on the considered generated images are the center of such images.

### BRIEF DESCRIPTION OF THE DRAWINGS

The invention will be easier to understand in view of the following description, provided solely as an example and with reference to the appended drawings in which:
- Figure 1 is a schematic view of an example of a coincidence position at the intersection of a first reference axis, a second reference axis and a third reference axis,
- Figure 2 is a schematic view of an example of an optical calibration system,
- Figure 3 is a schematic view of an example of an imaging device of an optical calibration system,
- Figure 4 is an example of functioning of an imaging device of an optical calibration system in an autocollimation mode,
- Figure 5 is an example of functioning of an imaging device of an optical calibration system in an imagery mode,
- Figure 6 is an example of a step of a method for aligning, on a reference axis of an angular and position reference tool, the calibration axis of an optical calibration device,
- Figure 7 is an example of an adjustable spherical element of an alignment set,
- Figure 8 is an example of a step for positioning an adjustable spherical element at a coincidence position relative to the structure of a quantum processor,
- Figure 9 is an example of a step for adjusting the position of a tertiary tool until the adjustable spherical element be observed at a defined measurement position on the image generated by the tertiary tool in the imagery mode,
- Figure 10 is an example of a step for adjusting the orientation of a tertiary tool until the tertiary tool in the autocollimation mode generates an image of the reflected image of a collimation object, obtained by reflection of the image of the collimation object on a planar mirror, at a defined measurement position on the generated image,
- Figure 11 is an example of a step of positioning and aligning a vacuum chamber on the structure of a quantum processor, and
- Figure 12 is an example of an organigram of some phases of a method for aligning at least an optical element mounted on a structure of a quantum processor.

### DETAILED DESCRIPTION OF SOME EMBODIMENTS

In the description, the terms "suitable for", "able to" and "configured for" are considered equivalent.

The systems and methods that will be described in the following of the description, have a particular interest for aligning optical elements of a quantum processor (also called quantum processing unit, or QPU).

A quantum processor uses the quantum properties of matter, such as superposition and entanglement, to perform operations on data. Unlike a classical computer based on transistors working on binary data (coded on bits, 0 or 1), the quantum processor works on qubits whose quantum state can take a continuous rather than discrete number of values.

In particular, a qubit refers to a two-level quantum mechanical system. For example, a qubit comprises two basic quantum states I0> and I1> representing the possible quantum states of the qubit. According to the superposition principle of quantum mechanics, any superposition of the form al0> + bl1> (a and b being complex numbers and aa*+bb*=1) is a possible quantum state of the qubit

Such a quantum processor comprises a structure 20 on which optical elements are mounted in a modular design.

In an example, the optical elements refer at least to:
- a vacuum chamber 22 in which particles are intended to be trapped,
- laser devices suitable to perform operation on particles trapped in the vacuum chamber 22, and
- observation device(s) suitable to perform measurements relative to the trapped particles in the vacuum chamber 22.

The laser devices comprise typically:
- one or several laser device(s) suitable to cool down and confine particles in the vacuum chamber 22, for example by generating magneto-optical traps,
- one or several laser device(s) suitable to generate trapping sites for particles in the vacuum chamber 22 enabling to form a quantum register, for example using a spatial light modulator or an acousto-optics deflector, and
- one or several laser device(s) suitable to excite particles in the vacuum chamber 22.

The particles meant to be trapped in the trapping sites are polarizable particles sensitive to alternative current (AC) Stark shift from lasers.

Preferably, the particles are atoms, and in particular electrically neutral atoms. Neutral atoms are, for example, Rubidium atoms, or Strontium atoms. In a variant, the particles are ions.

Examples of quantum computing devices based on neutral atoms are described in the article Loïc Henriet, Lucas Beguin, Adrien Signoles, Thierry Lahaye, Antoine Browaeys, Georges-Olivier Reymond, and Christophe Jurczak. Quantum computing with neutral atoms. Quantum, 4:327, Septembre 2020. ISSN 2521-327X. doi:10.22331/q-2020-09-21-327.

The alignment is carried out as a function of a so-called coincidence position Pₗ relative to the structure 20, which is a position where particles are intended to be trapped in the vacuum chamber 22 so as to form a quantum register.

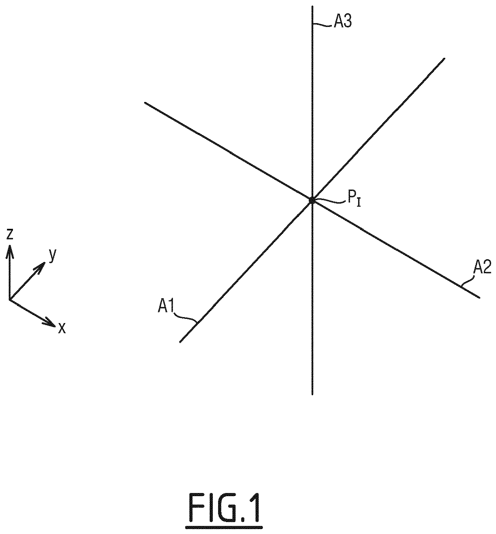

The coincidence position Pₗ can be defined as the trapping zone in which at least two axes intersect (and possibly more). As illustrated on figure 1, the coincidence position Pₗ is the intersection of a first reference axis A1, a second reference axis A2 and a third reference axis A3.

In the following, we describe elements and methods enabling to ease the alignment of one or several optical elements on the structure 20 of a quantum processor.

### Optical calibration system

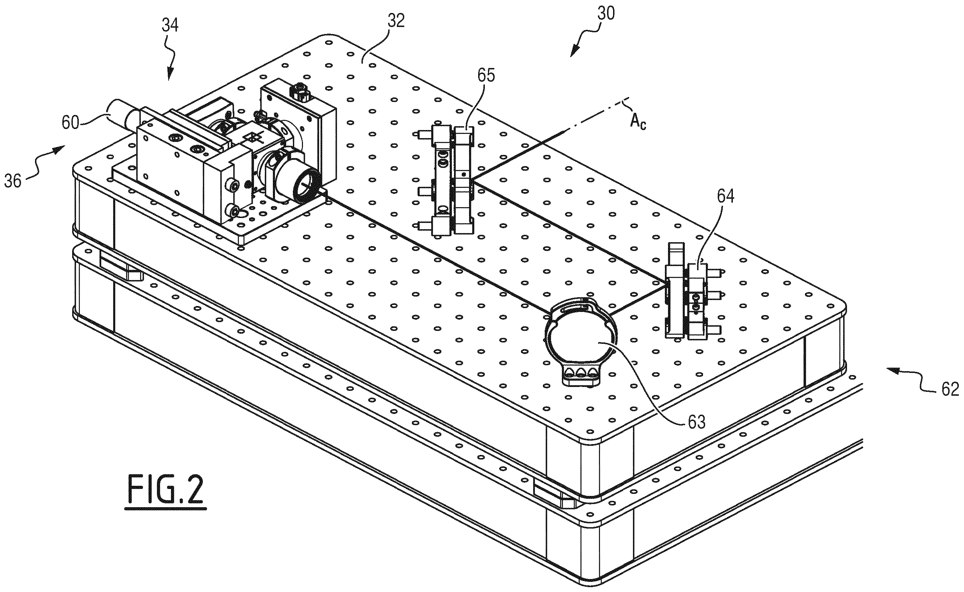

An example of an optical calibration system 30 is illustrated on figure 2.

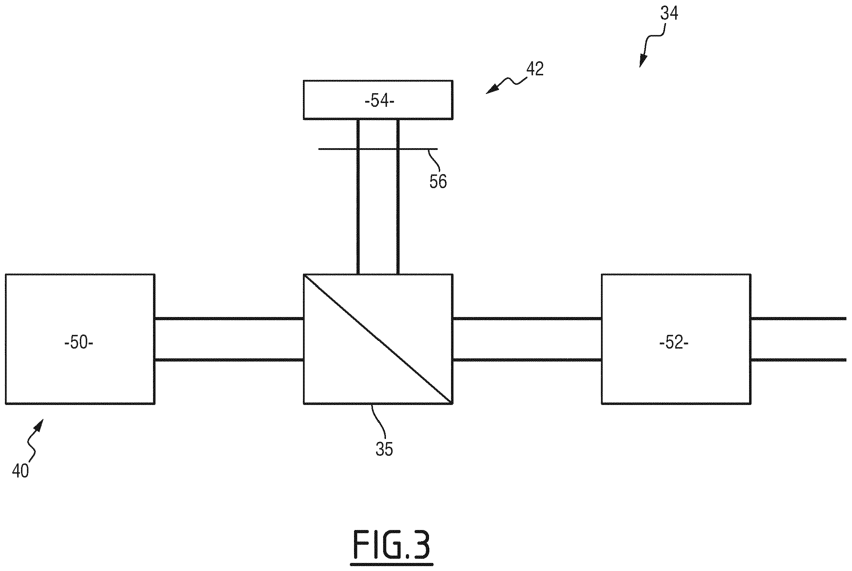

The optical calibration system 30 comprises a support 32 and an imaging device 34. Optionally, the optical calibration system 30 also comprises a separating unit 35 (illustrated on figure 3) and/or an adjustment device 36.

The optical calibration system 30 has a so-called calibration axis A_{c}. The calibration axis A_{c} has a position and a direction relative to the support 32. The position of the calibration axis A_{c} is defined by a specific point of space relative to the support 32, through which the calibration axis A_{c} passes.

In an example, the calibration axis A_{c} of the optical calibration system 30 has been aligned with a reference axis of an angular and position reference tool, so that the optical calibration system 30 can be used to align one or several optical modules relative to the reference axis. The angular and position reference tool is an optical device having an output optical axis taken as the reference axis.

The support 32 is, for example, an optical tray, such as an optical breadboard, configured to receive optical elements.

The imaging device 34 is mounted on the support 32.

The imaging device 34 comprises a camera 40 and a collimation unit 42. A schematic example of an imaging device 34 comprising the above elements is illustrated on figure 3.

The camera 40 comprises an image generation unit 50 and an objective 52.

The image generation unit 50 typically comprises a sensor and associated electronic circuitry to generate images as a function of the light received by the sensor.

The objective 52 is suitable to collect light for the image generation unit 50. The objective 52 typically comprises one or several optical lenses.

The collimation unit 42 is suitable to emit a collimated beam convoying an image of a so-called collimation object 56.

In an example, as illustrated on figure 3, the collimation unit 42 comprises a light source 54, a collimation object 56 and the objective 52. The objective 52 is therefore common to the camera 40 and to the collimation unit 42.

The light source 54 is suitable to illuminate the collimation object 56, enabling to obtain, at the output of the objective 52, a collimated beam convoying an image of the collimation object 56.

The collimation object 56 is for example a reticle or a test pattern. The collimation object 56 is for example centered relative to the primary collimated beam.

The imaging device 34 has two modes of operation among an autocollimation mode and an imagery mode.

The autocollimation mode is a mode in which both the image generation unit 50 and the collimation unit 42 are activated so that:
- a collimated beam convoying an image of the collimated object 56, which has been emitted by the collimation unit 42, is convoyed so as to be emitted at the output of the optical calibration system 30 along the direction of the calibration axis A_{c}, and
- the image generation unit 50 generates an image :
   ▪ corresponding to the light received by the optical calibration system 30 and collected by the objective 52, and
   ▪ so that the reflected image of the calibration object 56, obtained after reflection of the collimated beam on a reflector, is imaged at a defined measurement position on the generated image when the reflector is perpendicular to the collimated beam and is imaged at a position distant from the defined measurement position when the reflector is not perpendicular to the collimated beam. The defined measurement position on the considered generated image is for example the center of the image.

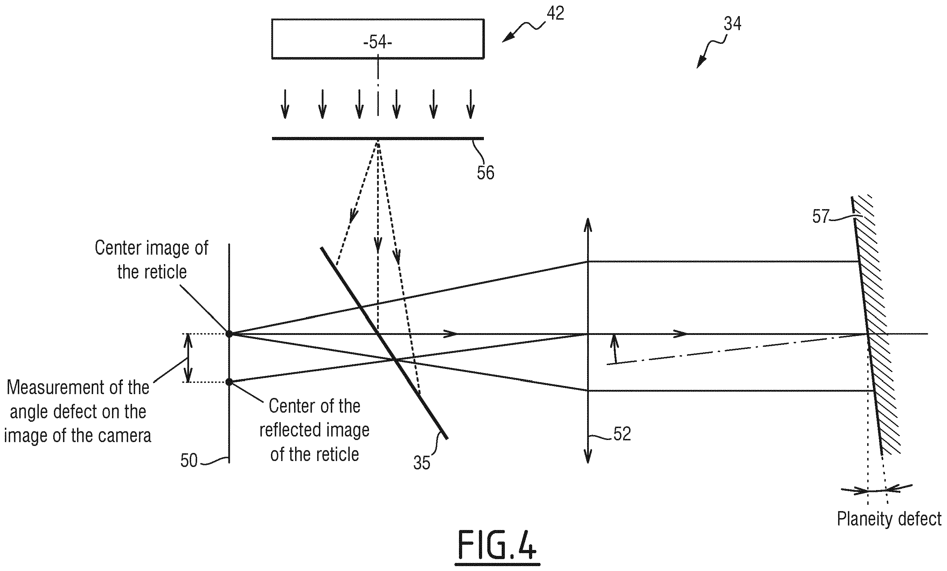

Figure 4 illustrates an example of operation of the imaging device 34 in the autocollimation mode. On this example, the collimated beam convoying an image of the collimation object 56 is convoyed at the output of the imaging device 34. In this example, the collimation object 56 is a reticle whose image is positioned at the center of the collimated beam.

The collimated beam is reflected on a planar mirror 57 which is not perpendicular relative to the collimated beam. The reflected beam is collected by the objective 52 and sent on the image generation unit 50 through the separating unit 35. Because the planar mirror 57 is not perpendicular relative to the collimated beam, the reflected image of the collimation object 56 (reticle) is not centered on the image generated by the image generation unit 50. The planar mirror 57 can then be adjusted until the reflected image be centered on the image generated by the image generation unit 50, which enables the planar mirror 57 to be perpendicular to the collimated beam.

The imagery mode is a mode in which only the image generation unit 50 is activated so that the image generation unit 50 generates an image corresponding to the light received by the optical calibration system 30 and collected by the objective 52, and so that an object positioned on the calibration axis A_{c} be imaged at a defined measurement position on the generated image. The defined measurement position on the considered generated image is for example the center of the image.

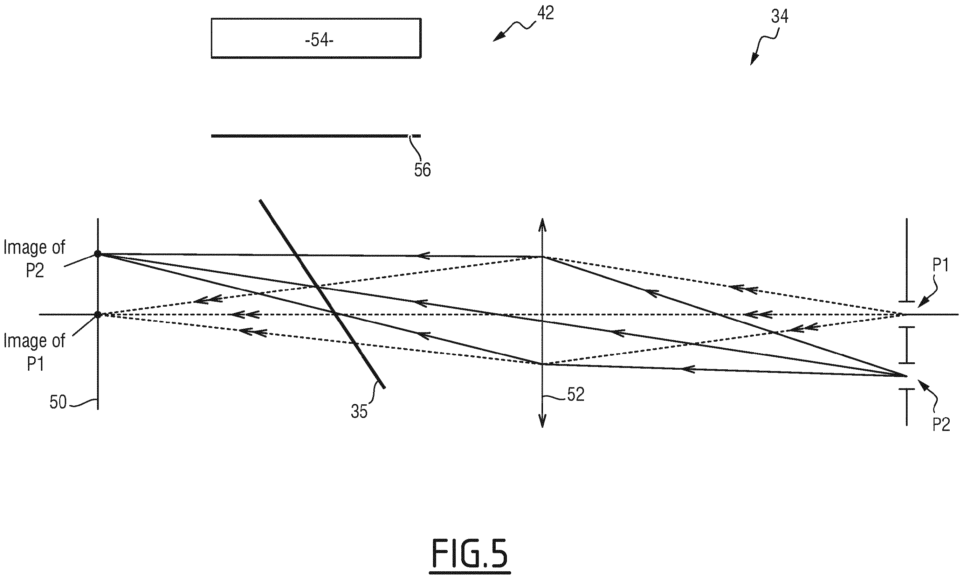

Figure 5 illustrates an example of operation of the imaging device 34 in the imagery mode. On this example, two pinholes P1 and P2 are considered. The pinhole P1 is centered on the output axis of the imaging device 34, whereas the pinhole P2 is off-centered relative to this output axis. The objective 52 collects light and sends it to the image generation unit 50 through the separating unit 35, enabling to generate an image on which the pinholes P1 and P2 are imaged. In this example, the defined measurement position is the center of the generated image. Hence, the generated image enables to identify that the pinhole P1 is positioned on the output axis of the imaging device 34, whereas the pinhole P2 is off-centered. The position of the pinhole P2 can then be adjusted until the pinhole P2 be centered.

The separating unit 35 is mounted on the support 32.

As illustrated on figure 3, the separating unit 35 is positioned relative to the camera 40 and the collimation unit 42 so as to define two optical paths:
- a first optical path between the collimation unit 42 (light source 54 of the collimation unit 42) and the objective 52 so as to convoy the collimated beam emitted by the collimation unit 42 at the output of the imaging device 34, and
- a second optical path between the image generation unit 50 and the objective 52 so as to convoy light collected by the objective 52 to the image generation unit 50.

In an example, the separating unit 35 is a beam splitter (semi-reflective blade) or a separator cube.

The adjustment device 36 is suitable to adjust the position and the direction relative to the support 32 of the calibration axis A_{c} of the optical calibration system 30.

In an example, as illustrated on figure 2, the adjustment device 36 comprises a position adjustment unit 60 suitable to modify the position of the image generation unit 50 relative to the support 32 so as to adjust the imaging position (position of the imaging plane) along the calibration axis A_{c} of the optical calibration system 30.

The position adjustment unit 60 is for example a translation plate suitable for moving the image generation unit 50 (sensor) relative to the support 32.

In complement or in variant, the adjustment device 36 comprises an angular and position adjustment unit 62. The angular and position adjustment unit 62 is mounted on the support 32. The angular and position adjustment unit 62 is adjustable in orientation relative to the support 32 so as to adjust the direction of the calibration axis A_{c} of the optical calibration system 30.

In an example, the angular and position adjustment unit 62 comprises at least an adjustable mirror.

Preferably, as illustrated on figure 2, the angular and position adjustment unit 62 comprises a fixed mirror 63 and two adjustable mirrors 64, 65.

In a variant, the imaging device 34 comprises no adjustment device and the adjustment of the position and of the direction, relative to the support 32, of the calibration axis A_{c}, is obtained by moving the imaging device 34 itself relative to the support 32.

### Calibration kit

The calibration kit 70 enables to align, on the reference axis of an angular and position reference tool, the calibration axis A_{c} of an optical calibration system 30 as previously described. The reference axis is along a so-called reference direction relative to a reference tray and passes by a so-called reference position relative to the reference tray. The reference position is at a so-called reference height.

The calibration kit comprises a calibration tray 72, a first adjustment accessory 74, a second adjustment accessory 76 and positioning elements 78.

The calibration tray 72 has the same dimensions than the reference tray.

In an example, the reference tray comprises fixations enabling to fix the reference tray to a structure 20 of a quantum processor, and the calibration tray 72 has the same fixations than the reference tray. The fixations are for example isostatic fixations.

The first adjustment 74 accessory comprises a so-called calibration mirror 80. The calibration mirror 80 is a planar mirror. The calibration mirror 80 is at the same height that the reference height when the first adjustment accessory 74 is positioned on the calibration tray 72.

The second adjustment accessory 76 comprises a so-called calibration object 82. The calibration object 82 is at the same height that the reference height when the second adjustment accessory 76 is positioned on the calibration tray 72. The collimation object 56 is for example a reticle or a test pattern.

The positioning elements 78 are positioned on the calibration tray 72. The positioning elements 78 enables to:
- position the first adjustment accessory 74 on the support 32 so that the calibration mirror 80 be perpendicular to the reference direction and on the path of a beam passing by the reference position and along the reference direction, and
- position the second adjustment accessory 76 on the support 32 so that the calibration object 82 be perpendicular to the reference direction and on the path of a beam passing by the reference position and along the reference direction.

The positioning elements 78 are for example mechanical stops.

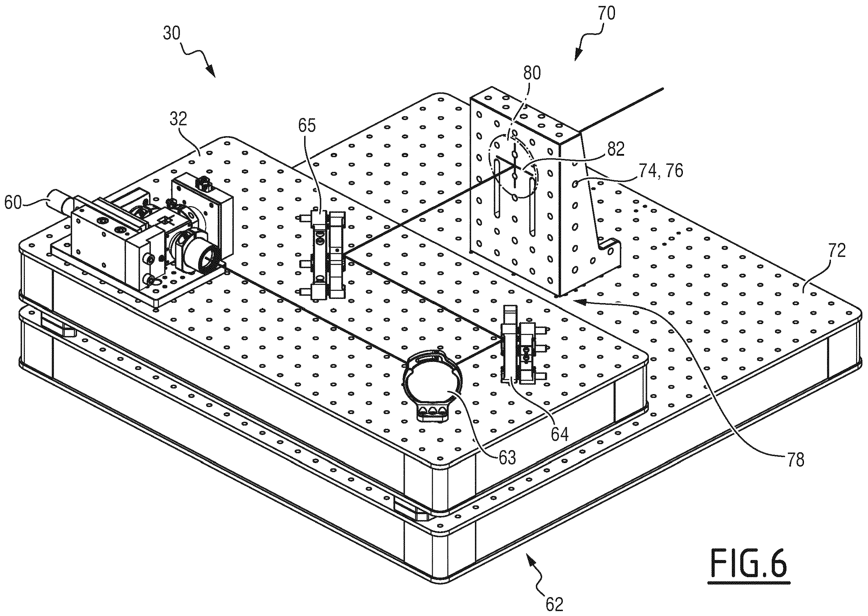

In an example of embodiment, as illustrated on figure 6, the first adjustment accessory 74 and the second adjustment accessory 76 form a single adjustment accessory, the calibration object 82 being superimposed on the calibration mirror 80.

In a variant, the first adjustment accessory 74 and the second adjustment accessory 76 are two distinct accessories.

### Method for aligning on a reference axis, the calibration axis of an optical calibration device as previously described, by using a calibration kit as previously described

The method comprises a step of fixing the optical calibration system 30 on the calibration tray 72.

The method then comprises a step of positioning the first adjustment accessory 74 on the calibration tray 72 according to the positioning elements 78.

Then, the method comprises a step of operating the imaging device 34 of the optical calibration system 30 in the autocollimation mode so that:
- a collimated beam is sent on the calibration mirror 80 of the first adjustment accessory 74,
- an image of the reflected image of the collimation object 56, obtained by reflection of the image of the collimation object 56 on the calibration mirror 80, is generated by the image generation unit 50.

The method comprises a step of adjusting, with the adjustment device 36, the direction of the calibration axis A_{c} so that the reflected image of the collimation object 56 be superimposed with a defined measurement position on the image generated by the image generation unit 50. The defined measurement position is for example the center of the generated image.

Preferably, the step of adjusting the direction of the calibration axis A_{c} is carried out by adjusting the orientation of the angular and position adjustment unit 62.

The method comprises a step of positioning the second adjustment accessory 76 on the calibration tray 72 according to the positioning elements 78. In the case where the first and the second adjustment accessory 76 are different, the first adjustment accessory 74 has first been removed.

The method comprises a step of operating the imaging device 34 of the optical calibration system 30 in the imagery mode so that an image of the calibration object 82 is generated by the image generation unit 50.

The method comprises a step of adjusting, with the adjustment device 36, the position of the calibration axis A_{c} so that the calibration object 82 be superimposed with the defined measurement position on the image generated by the image generation unit 50.

Preferably, the step of adjusting the position of the calibration axis A_{c} is carried out by adjusting the position of the image generation unit 50 with the position adjustment unit 60.

It should be noted that the above steps could be carried out in a different order. For example, the adjustment of the direction of the calibration axis A_{c} could be performed after the adjustment of the position of the calibration axis A_{c}. In addition, in the case where the first and the second accessory form a single accessory, the single accessory is positioned only once.

### Method for aligning at least an optical element mounted on a structure of a quantum processor

This part of the description is relative to a method for aligning one or several optical elements of a quantum processor. Such optical elements have been previously described.

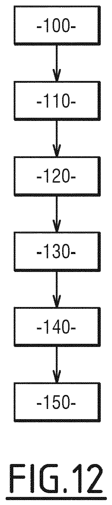

Figure 12 illustrates an example of organigram of some phases of the method.

As previously explained, the alignment is carried out as a function of a so-called coincidence position Pₗ relative to the structure 20, which is the intersection of a first reference axis A1 and of a second reference axis A2 (and of a third reference axis A3).

The alignment method is carried out using an alignment set. The alignment set comprises at least a primary tool 90, a secondary tool 92 and an adjustable spherical element 94. In a preferred embodiment, the alignment set also comprises a tertiary tool 96 and a planar mirror 98.

The primary tool 90 has a so-called primary axis A_{P} which is aligned on the first reference axis A1 when the primary tool 90 is mounted at a so-called primary position P_{P} on the structure 20.

The primary tool 90 is suitable to generate an image as a function of the light received by the primary tool 90 so that an object positioned on the primary axis A_{P} be imaged at a defined measurement position on the generated image. The defined measurement position is for example the center of the generated image.

In a preferred embodiment, the primary tool 90 has two modes of operation among:
- an autocollimation mode in which:
   ∘ a collimated beam is emitted at the output of the primary tool 90 along the direction of the primary axis A_{P}, the collimated beam convoying an image of a so-called collimation object 56, and
   ∘ an image is generated as a function of the light received by the primary tool 90 so that the reflected image of the calibration object 56, obtained after reflection of the collimated beam on a reflector, is imaged at a defined measurement position on the generated image when the reflector is perpendicular to the collimated beam and at a position distant from the defined measurement position when the reflector is not perpendicular to the collimated beam. The defined measurement position is for example the center of the generated image.
- an imagery mode in which an image is generated as a function of the light received by the primary tool 90 so that an object positioned on the primary axis A_{P} be imaged at a defined measurement position on the generated image. The defined measurement position is for example the center of the generated image.

Preferably, the primary tool 90 comprises an optical calibration system 30 as previously described in the description. The calibration axis A_{c} of the optical calibration system 30 of the primary tool 90 is the primary axis A_{P}.

The secondary tool 92 has a so-called secondary axis A_{S} which is aligned on the second reference axis A2 when the secondary tool 92 is mounted at a so-called secondary position P_{S} on the structure 20.

The secondary tool 92 is suitable to generate an image as a function of the light received by the secondary tool 92 so that an object positioned on the secondary axis A_{S} be imaged at a defined measurement position on the generated image. The defined measurement position is for example the center of the generated image.

The secondary tool 92 comprises for example a camera, and for example optical devices like lenses.

The adjustable spherical element 94 is an element having a ball which can be adjusted in position. The adjustable spherical element 94 is for example a commercial ball probe placed on a sample holder with adjustment means (e.g. adjustment pads for the x, y and z axes).

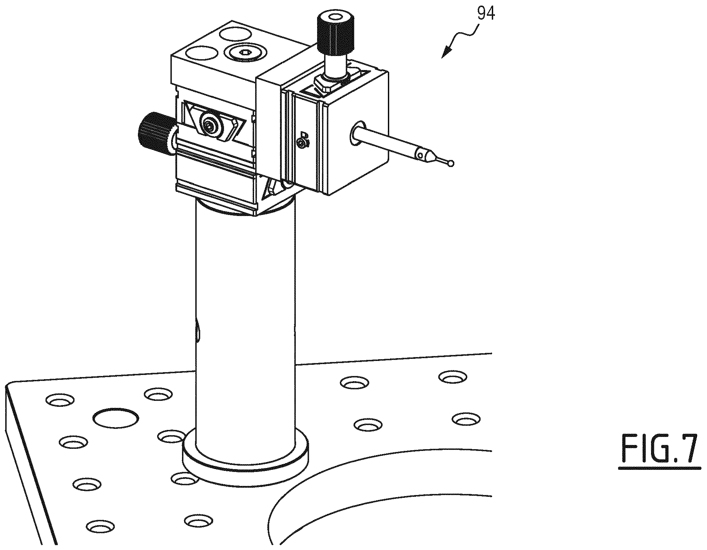

An example of an adjustable spherical element 94 is illustrated on figure 7.

The tertiary tool 96 has a so-called tertiary axis A_{T}. The tertiary tool 96 has two modes of operation among:
- an autocollimation mode in which:
   ∘ a collimated beam is emitted at the output of the tertiary tool 96 along the direction of the tertiary axis A_{T}, the collimated beam convoying an image of a so-called collimation object 56, and
   ∘ an image is generated as a function of the light received by the tertiary tool 96 so that the reflected image of the collimation object, obtained after reflection of the collimated beam on a reflector, is imaged at a defined measurement position on the generated image when the reflector is perpendicular to the collimated beam and at a position distant from the defined measurement position when the reflector is not perpendicular to the collimated beam. The defined measurement position is for example the center of the generated image.
- an imagery mode in which an image is generated as a function of the light received by the tertiary tool 96 so that an object positioned on the tertiary axis A_{T} be imaged at a defined measurement position on the generated image. The defined measurement position is for example the center of the generated image.

Preferably, the tertiary tool 96 comprises an optical calibration system 30 as previously described in the description. The calibration axis A_{c} of the optical calibration system 30 of the tertiary tool 96 is the tertiary axis A_{T}.

The alignment method comprises a phase 100 of positioning the adjustable spherical element 94 at the coincidence position Pₗ.

The positioning phase 100 comprises:
- mounting the primary tool 90 on the structure 20 at the primary position P_{P},
- mounting the secondary tool 92 on the structure 20 at the secondary position P_{S},
- mounting the adjustable spherical element 94 on the structure 20 and adjusting the position of the adjustable spherical element 94 so that the adjustable spherical element 94 be positioned
   - on the first reference axis A1 using the primary tool 90, and
   - on the second reference axis A2 using the secondary tool 92.

In particular, the positioning on the first reference axis A1 is for example carried out using the primary tool 90 in the imagery mode and adjusting the position of the adjustable spherical element 94 until the adjustable spherical element 94 be imaged at a defined measurement position on the generated image. The defined measurement position is for example the center of the generated image.

In particular, the positioning on the second reference axis A2 is for example carried out using the secondary tool 92 and adjusting the position of the adjustable spherical element 94 until the adjustable spherical element 94 be imaged at a defined measurement position on the generated image. The defined measurement position is for example the center of the generated image.

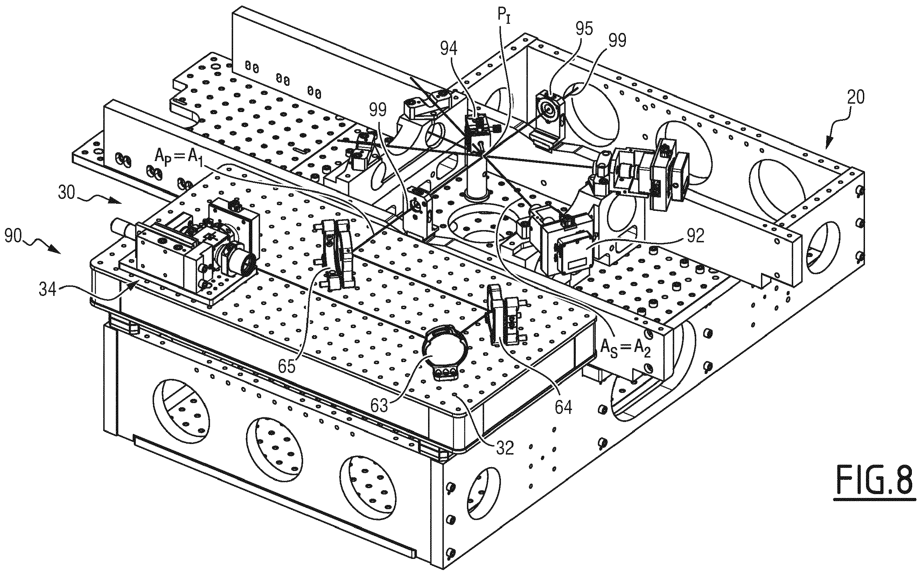

Figure 8 illustrates an example of the positioning of the adjustable spherical element 94 using the primary tool 90 and the secondary tool 92.

The alignment method comprises a phase 110 of mounting at least a so-called observation device on the structure 20 and adjusting the position of the or each observation device until the adjustable spherical element 94 be observed at a defined measurement position of the or each observation device. The defined measurement position is for example the center of the generated image.

In an example, the or at least some observation device(s) is/are device(s) enabling to make measurement at the coincidence position Pₗ. Such observation device(s) is/are for example chosen among a camera, a photodiode or a sensor.

In complement or in variant, the or at least one observation device, which has been mounted on the structure 20 and adjusted in position on the structure 20, is the tertiary tool 96.

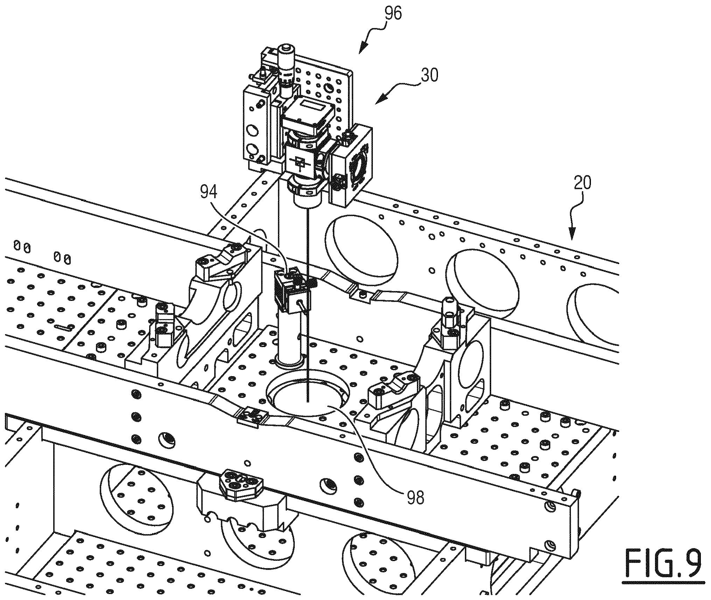

Figure 9 illustrates an example of adjustment of the position of the tertiary tool 96 so as to image the adjustable spherical element 94 at a defined measurement position on the image generated by the tertiary tool 96.

In this example, the first reference axis A1 and the second reference axis A2 are axes which are not parallel to any vertical axis relative to the structure 20. Preferably, the first reference axis A1 is in a plane horizontal relative to the structure 20, and advantageously the second reference axis A2 is also in a plane horizontal relative to the structure 20.

The alignment method comprises a phase 120 of determining references positions for a third reference axis A3. The third reference axis A3 is an axis passing by the coincidence position Pₗ and which is vertical relative to the structure 20. In particular, this phase 120 aims at aligning the tertiary axis A_{T} of the tertiary tool 96 with the third reference axis A3.

In this phase 120, the or at least one observation device, which has been mounted on the structure 20 and adjusted in position on the structure 20, is the tertiary tool 96. Hence, the tertiary tool has been positioned and adjusted in an imagery mode in order to have an image of the spherical element 94 imaged at a defined measurement position on the image generation unit 50. The defined measurement position is for example the center of the generated image.

The determination phase 120 comprises the following steps:
- preferably removing the adjustable spherical element 94,
- positioning the planar mirror 98 in a plane perpendicular to the third reference axis A3 and on the path of the third reference axis A3,
- adjusting the orientation of the tertiary tool 96 until the tertiary tool 96 in the autocollimation mode generates an image of the reflected image of the collimation object 56, obtained by reflection of the image of the collimation object 56 on the planar mirror 98, at a defined measurement position on the generated image. The defined measurement position is for example the center of the generated image.
- removing the planar mirror 98,
- determining reference positions for the third reference axis A3 using the tertiary tool 96 which has been adjusted in position and orientation.

Figure 9 illustrates an example of adjustment of the orientation of the tertiary tool 96 so as to image the reflected image of the collimation object, at a defined measurement position on the image generated by the tertiary tool 96.

Preferably, the step of determining reference positions for the third reference axis A3 comprises mounting at least two pinholes 97 on the structure 20 so as to allow the passage of light emitted along the third reference axis A3, using the tertiary tool 96. The mounted pinholes 97 form the reference positions for the third reference axis A3. For example, one pinhole 97 is intended to be positioned below the vacuum chamber 22 and the other one above the vacuum chamber 22.

In particular, the position of each pinhole 97 is adjusted using the tertiary tool 96 in the imagery mode. More precisely, the position of each pinhole 97 is adjusted so that the image of the pinhole 97 is at the defined measurement position on the image generated by the tertiary tool 96, The defined measurement position is for example the center of the generated image. Preferably, the pinholes 97 are also adjusted with the tertiary tool 96 so as to be perpendicular to the third reference axis A3.

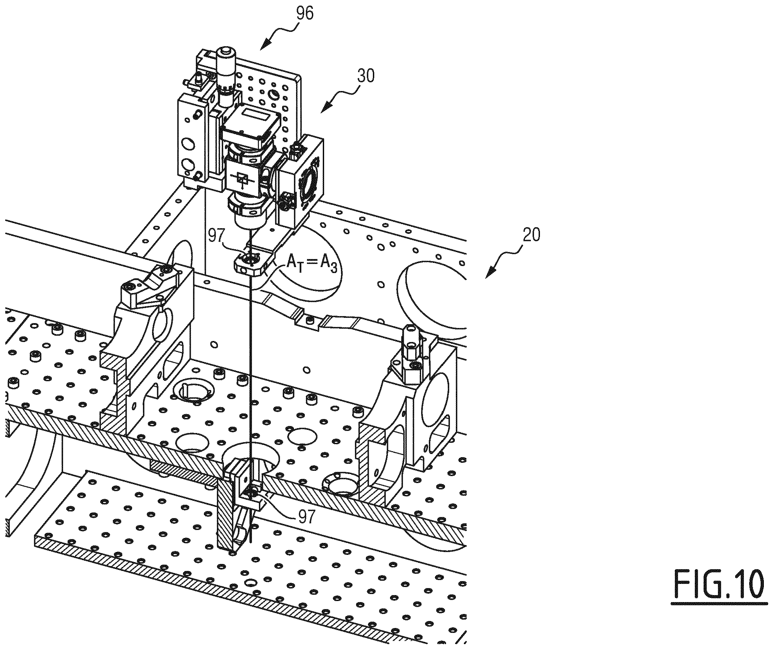

Figure 10 illustrates an example of adjusting pinholes 97 that are mounted so as to be centered on the third reference axis A3.

In a preferred complement, the alignment method also comprises a phase 130 of positioning and aligning the vacuum chamber 22 on the structure 20.

In particular, the vacuum chamber 22 has an objective holder H on which are mounted two objectives O1, O2. One of the objectives, called adjustable objective, is adjustable in position relative to the objective holder H.

The coincidence position Pₗ is a position where particles are intended to be trapped in the vacuum chamber 22 so as to form a quantum register. As previously defined, the coincidence position Pₗ is the intersection of at least two axes (three in this example).

The optical axis of the objectives O1, O2 of the objective holder H is intended to be positioned at the coincidence position Pₗ. The vacuum chamber 22 has a center defined as being on the optical axis of the objectives 01, 02 and between the two objectives 01, 02.

The phase 130 comprises the following steps:
- mounting the vacuum chamber 22 on the structure 20,
- adjusting the position and the orientation of the vacuum chamber 22 and of the adjustable objective until:
   - the optical axis of the adjustable objective be aligned with the first reference axis A1, using the primary tool 90,
   - the center of the vacuum chamber 22 is crossed by the third reference axis A3, using for example the mounted pinholes 97 for the third reference axis A3 and the tertiary tool 96. In particular, the vacuum chamber 22 is adjusted so as to allow the passage of a collimated beam emitted by the tertiary tool 96 through the pinholes 97 corresponding to the third reference axis A3.

Preferably, the step of adjusting the position and the orientation of the vacuum chamber 22 and of the adjustable objective comprises:
- positioning an additional planar mirror 95 on or approximately on the path of the first reference axis A1,
- adjusting the orientation of the additional planar mirror 95 so as to be perpendicular to the first reference axis A1 using the primary tool 90. In particular, the primary tool 90 is used in the autocollimation mode and the additional planar mirror 95 is adjusted until the image of the collimation object 56 be at the defined measurement position on the image generated by the primary tool 90.
- adjusting the position and the orientation of the vacuum chamber 22 and of the adjustable objective using the additional planar mirror 95 and the primary tool 90. In particular, the vacuum chamber 22 is adjusted:
   ▪ so as to allow the passage of a collimated beam, emitted by the primary tool 90 in the autocollimation mode, and of its reflection on the additional planar mirror 95 through the objectives, andr until the image of the collimation object 56 be at the defined measurement position on the image generated by the primary tool 90, and
   ▪ so that the center of the adjustable objective be at the defined measurement position on the image generated by the primary tool 90 in the imagery mode.

Optionally, pinholes 99 are also positioned on the path of the first reference axis A1 using the primary tool 90, which ease the adjustment of the optical axis of the adjustable objective is aligned with the first reference axis A1.

In a variant, the optical axis of the adjustable objective is aligned with the first reference axis A1, using the primary tool 90 in both the imagery mode and the autocollimation mode. In particular, in the imagery mode, the adjustable objective is adjusted so that its image be at the defined measurement position on the image generated by the primary tool 90. In the autocollimation mode, the adjustable objective is used to reflect the collimated beam thanks to a reflector such as a mirror previously align with the adjustable objective optical axis, and the adjustable objective is adjusted until the reflected image of the collimation object 56 be at the defined measurement position on the generated image.

For example, the vacuum chamber position along the objectives axis and rotation around objectives axis, is done using the tertiary tool 96 in imagery mode in order to center the objectives holder thanks to two pinholes previously fixed on the objectives holder and align with the particles position define by the adjustable objective definition.

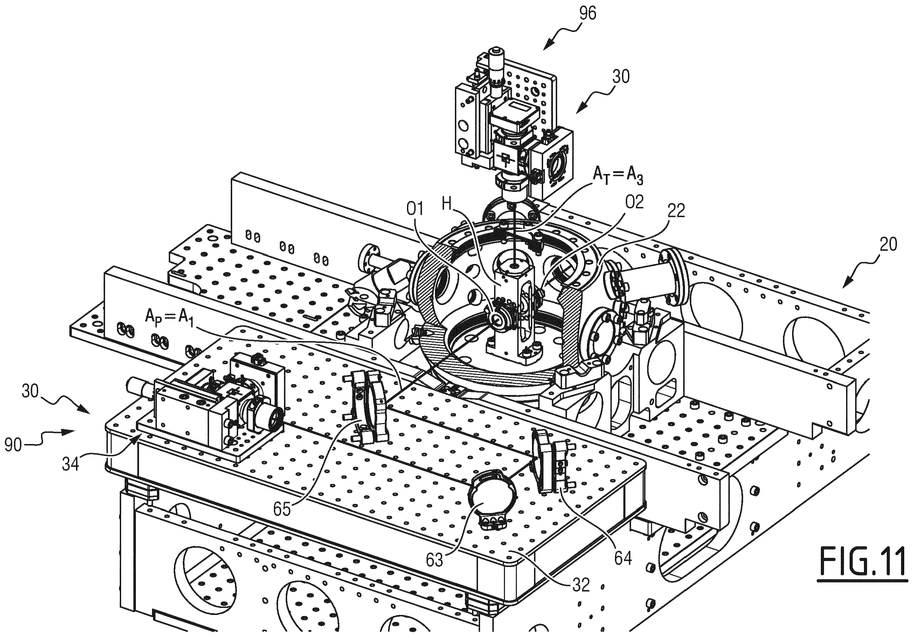

Figure 11 illustrates an example of mounting and adjusting the vacuum chamber 22 on the structure 20 using the primary tool 90 and the tertiary tool 96.

Preferably, the alignment method comprises a phase 140 of mounting on the structure 20 a so-called tertiary laser device so that the tertiary laser device emits a tertiary laser beam which is along the third reference axis A3.

The mounting phase 140 is carried out by:
- removing the tertiary tool 96,
- mounting the tertiary laser device on the structure 20, and
- adjusting the position and orientation of the tertiary laser device until the tertiary laser beam emitted by the tertiary laser device passes through the pinholes 97 of the third reference axis A3.

Preferably, the tertiary laser device is suitable to excite particles in the vacuum chamber 22, for example to a Rydberg state.

Preferably, the first reference axis A1 has the position and the direction of a primary laser beam intended to be emitted by a so-called primary laser device of the quantum processor when the primary laser device is mounted on the structure 20 at a defined position. The second reference axis A2 has the position and the direction of a secondary laser beam intended to be emitted by a so-called secondary laser device of the quantum processor when the secondary laser device is mounted on the structure 20 at a defined position.

Advantageously, the primary laser device is suitable to generate trapping sites for particles in the vacuum chamber 22 enabling to form a quantum register. The primary laser device comprises for example a spatial light modulator or an acousto-optics deflector.

In an example of embodiment, the secondary laser device is set according to the setting of the secondary tool 92 (camera). For example, the calibration of the secondary tool 92 is carried out on a test support. The secondary tool 92 to be adjusted is carried by a mount with an isostatic or non-isostatic attachment, which is itself carried by a test support. The secondary tool 92, which consists of an observation system, is placed opposite a collimator separated by a pinhole to adjust the position of the measurement reticle (image center, for example) at the center of the pinhole. The secondary laser device is set on the same tooling and therefore on the same reference position.

Advantageously, the secondary laser device is suitable to cool down and confine particles in the vacuum chamber 22 by generating magneto-optical traps.

Preferably, the alignment method comprises a final phase 150 of mounting comprising:
- removing the primary tool 90 and the secondary tool 92,
- mounting the primary laser device on the structure 20 at its defined position, and
- mounting the secondary laser device on the structure 20 at its defined position.

It should be noted that the order of the phases and steps of the alignment method is given as an example, and that the different phases and steps can be carried out according to another order.

Hence, the optical calibration system 30 and the alignment method described above enables to align optical elements as a function of a reference position. In particular, the alignment steps for each optical element is carried out successively, taking an absolute reference as a reference (rather than taking the position of the last aligned element as a reference from start to finish). This enables to ease the alignment of optical elements of a quantum processor by creating an optical referential on a structure that allowed the alignment of optical systems with an accurate reference in order to align optical beam on one or many coincidence point
In addition, the alignment method enables to ease the industrialization industrializing of products in particular quantum processors. Furthermore, it enables the evolution in the future of such products with options or improvements targeted according to needs. In particular, the invention fits in with a modular design of the QPU, in that there is no need to completely change the alignment method each time a module of the QPU evolves.

The invention has been described in the specific case of neutral atom-based quantum processors. However, it applies to other types of system, especially those requiring a good alignment between several lasers, for example ion-trapped quantum processors.

The person skilled in the art will understand that the embodiments and variants described above in the description can all be combined provided that they are technically compatible. Many other embodiments are possible without departing from the scope of the invention defined in the appended claims.

## Claims

1. Method for aligning at least an optical element mounted on a structure (20) of a quantum processor, the alignment being carried out as a function of a so-called coincidence position (Pₗ) relative to the structure (20), the coincidence position (Pₗ) being the intersection of a first reference axis (A1) and of a second reference axis (A2),
the method being carried out using an alignment set, the alignment set comprising at least:
- a primary tool (90) having a so-called primary axis (A_{P}) which is aligned on the first reference axis (A1) when the primary tool (90) is mounted at a so-called primary position (P_{P}) on the structure (20), the primary tool (90) being suitable to generate an image as a function of the light received by the primary tool (90) so that an object positioned on the primary axis (A_{P}) be imaged at a defined measurement position on the generated image,
- a secondary tool (92) having a so-called secondary axis (A_{S}) which is aligned on the second reference axis (A2) when the secondary tool (92) is mounted at a so-called secondary position (P_{S}) on the structure (20), the secondary tool (92) being suitable to generate an image as a function of the light received by the secondary tool (92) so that an object positioned on the secondary axis (A_{S}) be imaged at a defined measurement position on the generated image, and
- an adjustable spherical element (94),
the method comprising the following phases:
- positioning the adjustable spherical element (94) at the coincidence position (Pₗ), the positioning phase comprising:
• mounting the primary tool (90) on the structure (20) at the primary position (P_{P}),
• mounting the secondary tool (92) on the structure (20) at the secondary position (P_{S}),
• mounting the adjustable spherical element (94) on the structure (20) and adjusting the position of the adjustable spherical element (94) so that the adjustable spherical element (94) be positioned
∘ on the first reference axis (A1) using the primary tool (90), and
∘ on the second reference axis (A2) using the secondary tool (92),
- mounting at least a so-called observation device on the structure (20) and adjusting the position of the or each observation device until the adjustable spherical element (94) be observed at a defined measurement position for the or each observation device.

2. Method according to claim 1, wherein the or at least some observation device(s) is/are device(s) enabling to make measurement at the coincidence position (Pₗ), such observation device(s) being for example a camera, a photodiode or a sensor.

3. Method according to claim 1 or 2, wherein the alignment set also comprises:
- a tertiary tool (96) having a so-called tertiary axis (A_{T}), the tertiary tool (96) having two modes of operation among:
• an autocollimation mode in which:
∘ a collimated beam is emitted at the output of the tertiary tool (96) along the direction of the tertiary axis (A_{T}), the collimated beam convoying an image of a so-called collimation object (56), and
∘ an image is generated as a function of the light received by the tertiary tool (96) so that the reflected image of the collimation object, obtained after reflection of the collimated beam on a reflector, is imaged at a defined measurement position on the generated image when the reflector is perpendicular to the collimated beam and at a position distant from the defined measurement position when the reflector is not perpendicular to the collimated beam,
• an imagery mode in which an image is generated as a function of the light received by the tertiary tool (96) so that an object positioned on the tertiary axis (A_{T}) be imaged at a defined measurement position on the generated image,
- a planar mirror (98),
the or at least one observation device, which has been mounted on the structure (20) and adjusted in position on the structure (20), being the tertiary tool (96),
the first reference axis (A1) and the second reference axis (A2) being axes which are not parallel to any vertical axis relative to the structure (20),
the method also comprising the following phases:
- determining references positions for a third reference axis (A3), the third reference axis (A3) being an axis passing by the coincidence position (Pₗ) and which is vertical relative to the structure (20), the determination phase comprising the following steps:
• positioning the planar mirror (98) in a plane perpendicular to the third reference axis (A3) and on the path of the third reference axis (A3),
• adjusting the orientation of the tertiary tool (96) until the tertiary tool (96) in the autocollimation mode generates an image of the reflected image of the collimation object (56), obtained by reflection of the image of the collimation object (56) on the planar mirror (98), at a defined measurement position on the generated image,
• removing the planar mirror (98),
• determining reference positions for the third reference axis (A3) using the tertiary tool (96) which has been adjusted.

4. Method according to claim 3, wherein the step of determining reference positions for the third reference axis (A3) comprises mounting at least two pinholes (97) on the structure (20) so that the pinholes (97) allow the passage of light emitted along the third reference axis (A3), using the tertiary tool (96), the mounted pinholes (97) forming the reference positions for the third reference axis (A3).

5. Method according to claim 4, wherein at least one optical element to be aligned is a vacuum chamber (22) having an objective holder (H) on which are mounted two objectives (O1, O2), one of the objective, called adjustable objective, being adjustable in position relative to the objective holder (H), the coincidence position (Pₗ) being a position where particles are intended to be trapped in the vacuum chamber (22) so as to form a quantum register, the optical axis of the objectives (O1, O2) of the objective holder (H) being intended to be positioned at the coincidence position (Pₗ), the vacuum chamber (22) having a center defined as being on the optical axis of the objectives (O1, O2) and between the two objectives (O1, O2),
the primary tool (90) having two modes of operation among:
• an autocollimation mode in which:
∘ a collimated beam is emitted at the output of the primary tool (90) along the direction of the primary axis (A_{P}), the collimated beam convoying an image of a so-called collimation object (56), and
∘ an image is generated as a function of the light received by the primary tool (90) so that the reflected image of the calibration object (56), obtained after reflection of the collimated beam on a reflector, is imaged at a defined measurement position on the generated image when the reflector is perpendicular to the collimated beam and at a position distant from the defined measurement position when the reflector is not perpendicular to the collimated beam,
• an imagery mode in which an image is generated as a function of the light received by the primary tool (90) so that an object positioned on the primary axis (A_{P}) be imaged at a defined measurement position on the generated image,
the method also comprising a phase of positioning and aligning the vacuum chamber (22) on the structure (20), which comprises the following steps:
- mounting the vacuum chamber (22) on the structure (20),
- adjusting the position and the orientation of the vacuum chamber (22) and of the adjustable objective until:
• the optical axis of the adjustable objective be aligned with the first reference axis (A1), using the primary tool (90),
• the center of the vacuum chamber (22) is crossed by the third reference axis (A3), using the tertiary tool (96) and preferably the mounted pinholes (97) for the third reference axis (A3).

6. Method according to claim 5, wherein the step of adjusting the position and the orientation of the vacuum chamber (22) and of the adjustable objective comprises :
• positioning an additional planar mirror (95) on the path of the first reference axis (A1),
• adjusting the orientation of the additional planar mirror (95) so as to be perpendicular to the first reference axis (A1) using the primary tool (90), and
• adjusting the position and the orientation of the vacuum chamber (22) and the adjustable objective using the additional planar mirror (95) and the primary tool (90).

7. Method according to claim 5 or 6, wherein the method comprises a phase of mounting on the structure (20) a so-called tertiary laser device so that the tertiary laser device emits a tertiary laser beam which is along the third reference axis (A3), the phase of mounting the tertiary laser device being carried out by:
- removing the tertiary tool (96),
- mounting the tertiary laser device on the structure (20), and
- adjusting the position and orientation of the tertiary laser device until the tertiary laser beam emitted by the tertiary laser device passes through the pinholes (97) of the third reference axis (A3).

8. Method according to claim 7, wherein the tertiary laser device is suitable to excite particles in the vacuum chamber (22), for example to a Rydberg state.

9. Method according to any one of claims 5 to 8, wherein the primary tool (90) and the tertiary tool (96) each comprises an optical calibration system (30), each optical calibration system (30) having a so-called calibration axis (A_{c}), each optical calibration system (30) comprising:
- a support (32), the calibration axis (A_{c}) having a position and a direction relative to the support (32),
- an imaging device (34) mounted on the support (32), the imaging device (34) comprising:
• a camera (40) comprising an image generation unit (50) and an objective (52),
• a collimation unit (42) suitable to emit a collimated beam convoying an image of a so-called collimation object (56),
the imaging device (34) having two modes of operation among:
• an autocollimation mode in which both the image generation unit (50) and the collimation unit (42) are activated so that:
∘ a collimated beam emitted by the collimation unit (42) is convoyed so as to be emitted at the output of the optical calibration system (30) along the direction of the calibration axis (A_{c}),
∘ the image generation unit (50) generates an image corresponding to the light received by the optical calibration system (30) and collected by the objective (52), and so that the reflected image of the calibration object (56), obtained after reflection of the collimated beam on a reflector, is imaged at a defined measurement position on the generated image when the reflector is perpendicular to the collimated beam and is imaged at a position distant from the defined measurement position when the reflector is not perpendicular to the collimated beam,
• an imagery mode in which only the image generation unit (50) is activated so that the image generation unit (50) generates an image corresponding to the light received by the optical calibration system (30) and collected by the objective (52) so that an object positioned on the calibration axis (A_{c}) be imaged at a defined measurement position on the generated image,
the calibration axis (A_{c}) of the optical calibration system (30) of the primary tool (90) being the primary axis (A_{P}), the calibration axis (A_{c}) of the optical calibration system (30) of the tertiary tool (96) being the tertiary axis (A_{T}).

10. Method according to any one of claims 1 to 9, wherein the first reference axis (A1) has the position and the direction of a primary laser beam intended to be emitted by a so-called primary laser device of the quantum processor when the primary laser device is mounted on the structure (20) at a defined position, the second reference axis (A2) having the position and the direction of a secondary laser beam intended to be emitted by a so-called secondary laser device of the quantum processor when the secondary laser device is mounted on the structure (20) at a defined position.

11. Method according to claim 10 dependent on any one of claims 5 to 9, wherein the method comprises a final phase of mounting comprising:
- removing the primary tool (90) and the secondary tool (92),
- mounting the primary laser device on the structure (20) at its defined position, and
- mounting the secondary laser device on the structure (20) at its defined position.

12. Method according to claim 10 or 11, wherein the primary laser device is suitable to generate trapping sites for particles in the vacuum chamber (22) enabling to form a quantum register, the primary laser device comprising for example a spatial light modulator or an acousto-optics deflector.

13. Method according to any one of claims 10 to 12, wherein the secondary laser device is suitable to cool down and confine particles in the vacuum chamber (22), for example by generating a magneto-optical traps.

14. Method according to any one of claims 1 to 13, wherein the first reference axis (A1) is in a plane horizontal relative to the structure (20), preferably the second reference axis (A2) being also in a plane horizontal relative to the structure (20).

15. Method according to any one of claims 1 to 14, wherein the defined measurement positions on the considered generated images are the center of such images.
